# FASCICULE DE BREVET EUROPEEN

(11) **EP 3 945 438 B1**
(45) Date de publication et mention de la délivrance du brevet: **15.07.2026**
(21) Numéro de dépôt: 21187600.8
(22) Date de dépôt: 26.07.2021
(51) Int. Cl.: G06F 21/32, G02B 30/56

(54) **TERMINAL BIOMÉTRIQUE, EN PARTICULIER DE CONTRÔLE D ACCÈS**
BIOMETRISCHES ENDGERÄT, INSBESONDERE FÜR DIE ZUGANGSKONTROLLE
BIOMETRIC TERMINAL, IN PARTICULAR FOR CONTROLLING ACCESS

(30) Priorité: 30.07.2020 FR 2008089
(43) Date de publication de la demande: 02.02.2022
(73) Titulaire: IDEMIA Public Security France, 92400 Courbevoie (FR)
(72) Inventeur: MAILLARD, Sylvain Emile Henri, 92400 COURBEVOIE (FR); SANDRAZ, Jean-Rémi, 92400 COURBEVOIE (FR); DUMONT, Denis, 92400 COURBEVOIE (FR)
(74) Mandataire: IPS

(56) Documents cités:
- WO-A1-2019/102686
- JP-A- 2011 013 710
- US-A1- 2009 046 331

## Description

### DOMAINE TECHNIQUE GENERAL

La présente invention concerne le domaine des terminaux biométrique.

### ETAT DE L'ART

On connait des terminaux de contrôle d'accès, équipés d'une interface (par exemple un écran tactile) et d'un ou plusieurs capteurs d'empreintes biométriques (scanner d'empreinte digitale ou d'empreinte palmaire) qui sont capables de référencer puis d'identifier des individus, et de déclencher des actions en fonction du résultat de cette identification, par exemple l'ouverture d'une porte si l'individu identifié à un droit d'accès.

On les trouve par exemple à l'entrée des sièges d'entreprises, dans les infrastructures sensibles comme les ports et aéroports, les bâtiments gouvernementaux, les laboratoires, les bâtiments militaires, les institutions financières, et tout simplement sur la porte de pièces sécurisées comme un local informatique ou une chambre forte.

Le problème est qu'il est nécessaire de toucher l'interface, en particulier de poser sa main sur le capteur, ce qui n'est plus souhaitable aujourd'hui, notamment du fait du risque pandémique.

Il a par conséquent été proposé les terminaux de la gamme MorphoWave^{®}, capables d'acquérir une empreinte biométrique sans contact à la volée. Ces terminaux présentent une forme en « C » définissant dans le creux du C une encoche dans laquelle on vient glisser la main, paume vers le bas. Des moyens d'acquisition biométrique disposés dans la partie inférieure du C prennent une image de la main sans contact. La partie supérieure, appelée « casquette » présente un écran et des moyens de communication en champ proche (NFC) par exemple avec un badge d'accès.

Cette technologie s'avère très performante et a été adoptée massivement. On constate néanmoins parfois que les utilisateurs passent un peu rapidement leur main et heurtent la casquette, d'où un sans contact qui n'est pas parfait.

On pourrait élargir l'encoche voire enlever la casquette, mais alors les performances se dégradent : d'une part l'utilisateur a tendance à mal placer sa main, et d'autre part l'exposition à la lumière ambiante augmente.

Il serait par conséquent souhaitable de disposer d'une nouvelle structure de terminal de contrôle d'accès qui s'avère au moins aussi performante et ergonomique que les structures connues, tout en éliminant complètement le risque de contact.

### PRESENTATION DE L'INVENTION

Selon un premier aspect, la présente invention concerne un terminal comprenant : un corps principal présentant une surface supérieure sensiblement horizontale ; une tour s'étendant sensiblement verticalement depuis ledit corps principal, de sorte à définir un volume d'acquisition délimité par ladite surface supérieure et la tour ; des moyens d'acquisition optique disposés dans le corps principal de sorte à pouvoir acquérir une image d'une empreinte biométrique placée dans le volume d'acquisition en regard de la surface supérieure ; une interface utilisateur disposée dans la tour ; dans lequel la tour présente une cavité, et l'interface utilisateur comprend un écran disposé au fond de la cavité et une plaque semi-réfléchissante fermant la cavité de sorte à donner l'illusion optique que ledit écran flotte dans le volume d'acquisition.

Le terminal selon le premier aspect peut également comprendre les caractéristiques optionnelles ci-dessous, prises seules ou en combinaison lorsque cela fait sens techniquement.

De préférence, la tour présente une surface frontale dans laquelle est intégrée ladite plaque semi-réfléchissante.

De préférence, ledit volume d'acquisition est uniquement fermé par lesdites surface supérieure du corps principal et surface frontale de la tour.

De préférence, l'écran et la plaque semi-réfléchissante s'étendent selon des plans sécants, ladite cavité s'étendant selon un axe sensiblement orthogonal audit plan selon lequel s'étend l'écran, en particulier un axe orienté en direction de la surface supérieure du corps principal.

De préférence, les moyens d'acquisition optique permettent l'acquisition d'images infrarouge, le corps principal comprenant en outre des moyens d'éclairage infrarouge du volume d'acquisition.

De préférence, les moyens d'acquisition optique comprennent avantageusement une caméra infrarouge disposé à l'intérieur du corps principal sous la tour, et un miroir disposé sous la surface supérieure du corps principal de sorte à renvoyer la lumière du volume d'acquisition vers la caméra.

De préférence, le terminal comprend en outre des moyens de mesure de position d'obstacles dans le volume, positionnés dans la tour au-dessus de la cavité.

De préférence, les moyens de mesure de position d'obstacles comprennent des émetteurs et des récepteurs infrarouges.

De préférence, les moyens de mesure de position d'obstacles sont synchronisés avec lesdits moyens d'acquisition optique de sorte à ne pas illuminer le volume d'acquisition pendant l'acquisition de données par lesdits moyens d'acquisition optique.

De préférence, le terminal comprend en outre un lecteur sans-contact disposé dans la tour de sorte à pouvoir communiquer avec une carte placée dans le volume d'acquisition.

De préférence, l'écran est configuré pour afficher en fonctionnement un guide virtuel pour aider un utilisateur à placer son empreinte biométrique dans le volume d'acquisition.

De préférence, la plaque semi-réfléchissante est une plaque d'au moins une couche de micromiroirs s'étendant parallèlement entre eux selon une direction orthogonale au plan dans lequel s'étend la plaque semi-réfléchissante.

De préférence, le terminal est adapté pour le contrôle d'accès, et comprend en outre des moyens de traitement d'une image d'une empreinte biométrique acquise par les moyens d'acquisition optique, ladite empreinte biométrique étant au moins une empreinte digitale d'une main.

Selon un deuxième aspect, l'invention concerne par ailleurs un procédé d'acquisition d'une image d'une empreinte biométrique au moyen d'un terminal selon l'une des revendications 1 à 13, caractérisé en ce qu'il comprend la mise en œuvre d'étapes de :
(a) Affichage par l'écran d'un guide virtuel pour aider un utilisateur à placer son empreinte biométrique dans le volume d'acquisition ;
(b) Acquisition par les moyens d'acquisition optique d'une image de l'empreinte biométrique placée dans le volume d'acquisition.

### PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :
- la figure 1 représente de façon générale un mode de réalisation du terminal selon l'invention ;
- la figure 2 représente les étapes d'un procédé d'utilisation de terminal selon l'invention.

### DESCRIPTION DETAILLEE

### Architecture globale

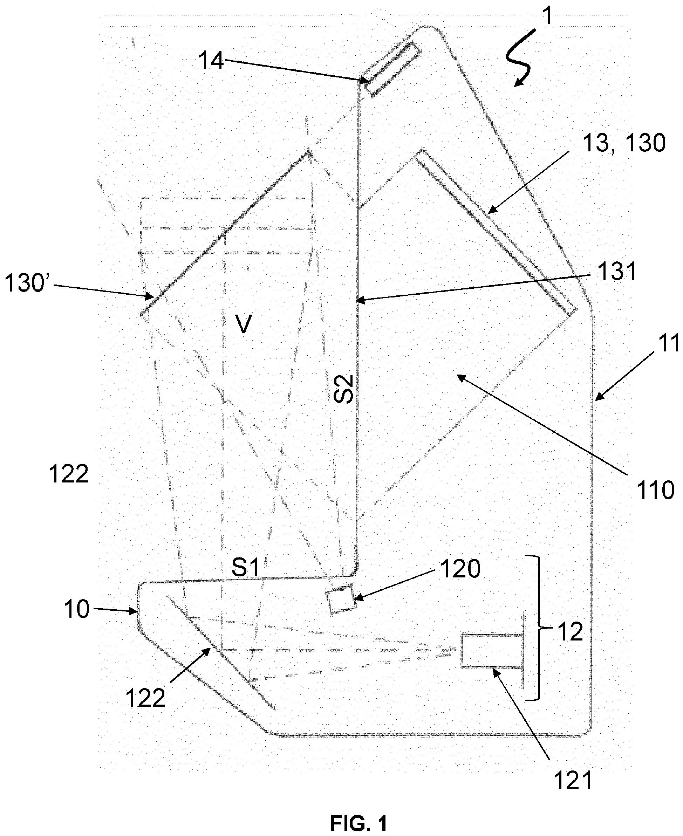

En référence à la **Figure 1****,** est proposé un terminal 1 de type terminal de contrôle d'accès. Ce terminal 1 comprend deux éléments structurels majeurs, un corps principal 10 et une tour 11. La tour 11 s'étend sensiblement verticalement depuis ledit corps principal 10, de sorte à présenter une forme globale en « L ».

Plus précisément, le corps principal 10 présente une surface supérieure S1 sensiblement horizontale, en bordure de laquelle la tour 11 s'élève. Ici, et dans la suite de la présente description, par « sensiblement » on entend à 30° près, préférentiellement à 20° près, et encore plus préférentiellement à 10° près.

Sur la figure 1, un repère xOz est représenté, et on définit par commodité Oz comme l'axe vertical (orienté du « bas » vers le « haut »), et Ox comme l'axe horizontal (orienté de « l'arrière » vers « l'avant »). Ainsi, la tour 11 est dans ce repère en arrière de la surface supérieure S1. Cette notion d'avant et d'arrière s'entend par rapport à une position nominale dans laquelle un utilisateur arrive depuis l'avant du terminal et avance sa main en direction de la tour 11 jusqu'à survoler la surface supérieure S1 (voir plus loin). Typiquement, soit le corps principal 10 est posé sur un support (par exemple monté sur un pilier), soit l'ensemble est fixé à un mur au niveau de l'arrière du corps principal 10 et de la tour 11. L'accès à l'avant doit rester dégagé.

De manière préférée, la tour 11 présente elle-même une surface frontale S2 (verticale), sensiblement orthogonale à la surface supérieure S1 du corps principal 10. A noter que la surface S2 n'est pas nécessairement plane.

Cette structure définit un volume V dit d'acquisition situé devant la tour 11 et au-dessus du corps principal 10. En d'autres termes, le volume V est délimité par la surface supérieure S1 (qui constitue une limite inférieure du volume V) et la tour 11 (dont la surface frontale S2 constitue une limite arrière).

De manière connue, le volume V n'est pas fermé latéralement, ce qui permet de faire pénétrer la main dans le volume V d'un balayage latéral (outre la possibilité de simplement avancer la main vers la tour 11 comme expliqué), i.e. selon un axe Oy (non représenté sur la figure 1) orthogonal aux axes Ox et Oz.

De manière particulièrement originale, le terminal 1 ne comprend pas de « casquette » telle que celle d'un MorphoWave, i.e. le volume V n'est pas fermé en partie supérieure, ce qui permet également de faire rentrer la main dans le volume V par au-dessus (en l'abaissant). En d'autres termes, ledit volume d'acquisition V est uniquement fermé par lesdites surface supérieure S1 du corps principal 10 et surface frontale S2 de la tour 11.

Cela explique la forme en « L » plutôt qu'en « C » (la casquette formait la barre supérieure du C). A noter qu'une structure permet toujours à un utilisateur de passer un point de contrôle sans s'arrêter et s'avère encore plus intuitive car le nombre de mouvements permettant une acquisition biométrique augmente. Cela permet un flux de passage encore plus élevé.

Le terminal 1 comprend en outre des moyens d'acquisition optique 12 disposés dans le corps principal 10 de sorte à pouvoir acquérir une image d'une empreinte biométrique placée dans le volume d'acquisition V en regard de la surface supérieure S1. Par « en regard » de la surface supérieure S1, on entend « face à » cette surface supérieure S1, mais sans contact. Ici, par empreinte biométrique on entend en particulier au moins une empreinte digitale ou une empreinte palmaire, i.e. c'est dans tous les cas une main d'un individu qui est placée dans le volume V et dont au moins une image est acquise par les moyens 12. A noter que dans le mode de réalisation préféré d'empreinte digitales, ladite image acquise peut être une image d'une ou plusieurs empreintes digitales (plusieurs doigts).

Du fait que les moyens d'acquisition optique 12 sont disposés dans le corps principal 10, l'acquisition est par en dessous, i.e. l'utilisateur doit placer la paume vers le bas et le dos de la main vers le haut (puisque le volume V est au-dessus de la surface S2 elle-même orientée vers le haut). La main doit « flotter » dans le volume V, et on verra plus loin comment on prévient que l'utilisateur touche les surfaces S1 et S2.

Par ailleurs, on verra également plus loin des modes de réalisation avantageux des moyens d'acquisition optique 12, mais on comprend que toute technologie connue de l'homme du métier peut être adaptée. A noter que la surface S1 peut être pourvue d'une ouverture ou fermée par une vitre pour protéger les moyens d'acquisition optique 12.

Le terminal 1 comprend en outre une interface utilisateur 13 disposée dans la tour 11, et le cas échéant des moyens de traitement de données, des moyens de stockage de données, des moyens de communication, etc. (disposés eux-mêmes généralement dans le corps principal 10).

Dans la suite de la présente description, on prendra l'exemple d'un terminal de contrôle d'accès 1. De façon générale la présente invention peut s'appliquer à tout terminal d'identification ou d'authentification biométrique, par exemple un distributeur de billets, une borne d'achat de tickets de transports, un valideur, etc. L'homme du métier saura transposer.

A ce titre, les moyens de traitement de données (non représentés) peuvent être configurés pour mettre en œuvre éventuellement le traitement de données biométriques acquises (par exemple une segmentation des images ou leur correction, mais également leur analyse subséquente jusqu'à comparaison avec des données biométriques de référence), et/ou le contrôle d'accès en fonction des données qu'il reçoit. Il peut à ce titre être connecté à un actionneur mécanique tel qu'un verrou ou une barrière pour permettre l'accès physique d'un utilisateur lorsque l'accès lui est accordé. Ces fonctions de traitement peuvent alternativement être tout ou partiellement déportées sur un serveur distant.

Toute technique connue d'identification ou d'authentification biométrique pourra être mise en œuvre.

### Ecran « flottant »

Comme expliqué, l'absence de la casquette peut être problématique si l'utilisateur place mal sa main dans le volume V (trop haut par exemple). Par ailleurs, l'absence de casquette diminue très fortement les risques que la main de l'utilisateur touche quoi que ce soit (en effet la casquette bloquait la vue) mais il est toujours possible que l'utilisateur touche les surfaces S1 ou S2 par erreur (en particulier en tentant de positionner mieux sa main suite à un échec d'identification).

Le présent terminal 1 résout ces problèmes grâce à une architecture originale de l'interface utilisateur 13 qui permet d'afficher un guide virtuel dans le volume V de sorte à aider l'utilisateur à positionner sa main sans qu'aucun contact ne soit possible. En effet, alors que la casquette cachait la main à l'utilisateur, elle est ici pleinement visible et peut être guidée visuellement dans l'espace.

Pour ce faire, la tour 11 présente une cavité 110 (cavité borgne débouchant dans la surface S2), et l'interface utilisateur comprend un écran 130 disposé au fond de la cavité 110 et une plaque semi-réfléchissante 131 fermant la cavité 110.

Cette structure, a priori très simple, permet en fait de mettre en œuvre une technique donnant l'illusion optique que ledit écran 130 flotte dans le volume d'acquisition V. Pour reformuler, ce phénomène donne l'impression que l'écran 130 est à un autre emplacement que son emplacement réel, en l'espèce dans le volume V.

Ainsi, l'utilisateur cherchant à toucher l'écran 130 va spontanément bien placer sa main dans le volume V sans toucher aucune des surfaces S1 et S2. On peut d'ailleurs afficher sur l'écran 130 un guide virtuel pour aider un utilisateur à placer son empreinte biométrique dans le volume d'acquisition V, par exemple un contour de main de référence (ou tout autre visuel incitatif). On comprend que même si le guide virtuel est affiché sur l'écran physique 130, il « flottera » dans le volume V sur l'écran virtuel 130'. Par empreinte biométrique « bien placée » dans le volume d'acquisition V, on entend à la bonne distance de la surface S1 et sensiblement centrée de sorte que tous les doigts puissent être observés, tout en restant à distance de la surface frontale S2 (pour éviter tout contact non hygiénique).

L'explication d'un tel phénomène d'illusion optique est simple : le cerveau humain ne perçoit pas la déviation des rayons lumineux au niveau de la plaque semi-réfléchissante 131 et suppose que les rayons sont rectilignes, c'est pourquoi il imagine que l'écran 130 est à la position 130' dans le volume V. On répète qu'il s'agit d'une illusion d'optique : il n'y a en pratique aucune émission de lumière dans le volume V, l'écran virtuel 130' est simplement un reflet de l'écran réel 130.

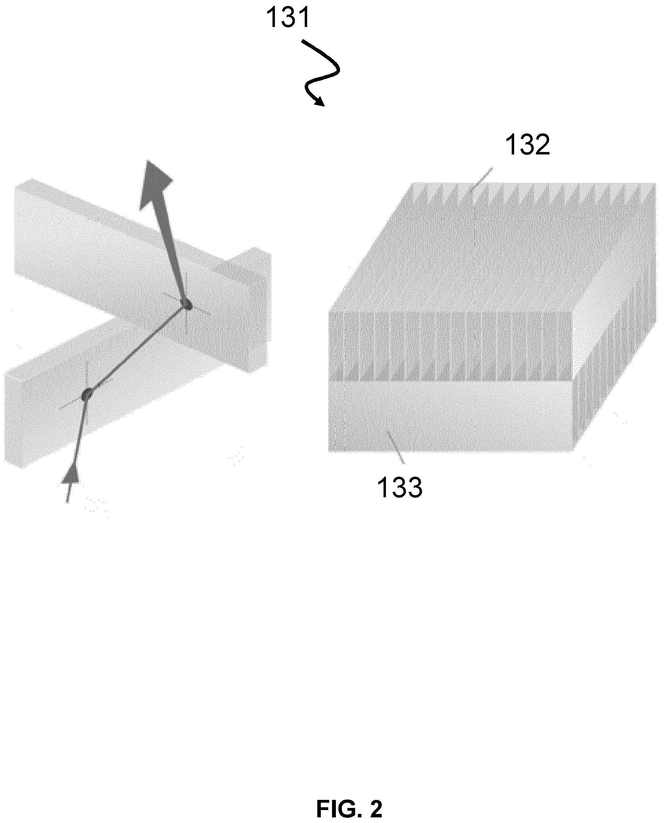

La plaque semi-réfléchissante peut être une simple vitre métallisée (si la cavité 110 est suffisamment sombre), mais préférentiellement c'est une plaque de micromiroirs 132 comme l'on voit sur la **Figure 2** : ces micromiroirs 132 s'étendent parallèlement entre eux, selon une direction orthogonale au plan dans lequel s'étend la plaque 131 (i.e. dans l'épaisseur de la plaque). Comme l'on voit sur la figure 2, (1) les micromiroirs 132 sont des éléments transparents présentant juste leur surface principale 133 réfléchissante de sorte que la lumière peut entrer par leur flanc, et (2) il peut y avoir deux couches dans lesquelles les micromiroirs 132 sont croisés, de préférence orthogonalement, pour refléter deux fois la lumière (un nombre pair, de sorte que l'affichage n'est pas « en miroir » c'est-à-dire non symétrisé, i.e. l'écran 130 peut afficher normalement). On comprend que la lumière issue de l'écran 130 traverse la plaque 131, mais est déviée d'un angle égal à deux fois l'angle avec la normale à la plaque (si le rayon a un angle de +α avec la normale, il ressort avec un angle de -α).

Lorsque la tour 11 présente une surface frontale S2, la plaque semi-réfléchissante 131 s'y intègre (l'ensemble formant préférentiellement une surface sensiblement verticale en particulier sensiblement plane).

On note qu'une telle structure d'interface utilisateur 13 est simple et très peu chère, puisqu'elle ne coute guère plus que l'écran 130 qui était déjà présent, alors qu'une vraie technologie « holographique » nécessite du matériel complexe et couteux qui en prime serait complexe à combiner avec les moyens d'acquisition optique 12.

De manière préférée, comme l'on voit sur la figure 1, l'écran 130 et la plaque semi-réfléchissante 131 s'étendent selon des plans sécants, i.e. ne sont pas parallèles. Avantageusement, des directions normales à ces plans différent d'entre 30° et 60°, en particulier environ 45°. En pratique, comme expliqué, la plaque semi-réfléchissante 131 s'étend sensiblement verticalement, i.e. c'est l'écran 130 qui n'est pas vertical et préférentiellement orienté vers le bas (c'est-à-dire en direction de la surface supérieure S1 du corps principal 10) de sorte que son reflet 130' soit orienté vers le haut (et incite à placer la main en biais ou horizontalement).

En termes mathématiques, si l'on définit un axe selon lequel s'étend la cavité 110, cet axe est sensiblement orthogonal audit plan selon lequel s'étend l'écran 130, mais ni orthogonal ni parallèle à un axe orthogonal au plan selon lequel s'étend la plaque semi-réfléchissante 131 (i.e. l'axe Ox). Cet axe selon lequel s'étend la cavité 110 est comme expliqué orienté en direction de la surface supérieure S1 du corps principal 10.

A noter que les guides virtuels affichables par l'écran 130 (et donc l'écran virtuel 130') peuvent être de natures variées. En effet, il peut être prévu de s'authentifier via des QR codes lus par les moyens d'acquisition optique 12, par exemple imprimés sur une carte à placer également dans le volume d'acquisition V (par exemple pour des utilisateurs « visiteurs » dont la biométrie n'est pas présente dans la base de données de référence, on leur donne une carte active temporairement), et alors le guide permet d'aider un utilisateur à placer une carte présentant QR code dans le volume d'acquisition V.

### Moyens d'acquisition optique

La structure d'interface utilisateur 13 présentée avant permet comme expliqué de se passer très astucieusement de casquette.

La seule difficulté qui peut exister tient dans l'éclairage : en effet, la casquette permettait de faire de l'ombre sur la surface S1, et la structure « ouverte » peut être délicate à utiliser par exemple en extérieur (environnement très lumineux).

Ce problème est avantageusement résolu en choisissant des moyens d'acquisition optique 12 qui ne fonctionnent pas en lumière visible mais plutôt en infrarouge. Les éclairages ne sont alors plus gênants.

En d'autres termes, les moyens d'acquisition optique 12 sont choisis pour permettre l'acquisition d'images infrarouge, i.e. ils comprennent une caméra infrarouge 121.

A ce titre, comme l'on voit sur la figure 1, le corps principal 10 comprend avantageusement en outre des moyens d'éclairage infrarouge 120 du volume d'acquisition V, en particulier disposés au voisinage de la surface S1 de sorte à ne pas bloquer la lumière mais bien éclairer la main. Plus précisément, la main est illuminée par en-dessous par les moyens d'éclairage infrarouge 120, et la lumière infrarouge réfléchie vers la surface S1 est captée par les moyens d'acquisition optique 12.

Pour éviter que ces moyens d'éclairage 120 illuminent en infrarouge en permanence, on peut prévoir à proximité du volume V (notamment sur la surface S1 ou à côté des moyens 120) un détecteur de proximité ou de mouvement et configurer les moyens d'éclairage 120 pour fonctionner uniquement quand ce détecteur détecte la présence d'une main dans le volume V.

De manière particulièrement préférée, la lumière émise par les moyens d'éclairage infrarouge 120 est une lumière texturée, de sorte à permettre l'acquisition d'une image de profondeur de l'empreinte biométrique. Par image de profondeur, on entend une image contenant une information relative à la distance selon l'axe optique entre le centre optique de la caméra et le point observé. Dans le cas d'espèce (d'une image infrarouge éclairée en lumière structurée), on parle d'image dite « IR 3D ».

A nouveau l'homme du métier ne sera pas limité à une technique d'acquisition particulière, et par exemple il peut tout à fait y avoir plusieurs caméras 121 dont certaines en lumière visible ou en mesure pure de distance pour profondeur (temps de vol par exemple).

En termes d'intégration, la caméra 121 peut être disposée à l'intérieur du corps principal 10 directement sous la surface S1 (le cas échéant protégée par une vitre), mais pour diminuer le volume du corps principal 10, comme représenté par la figure 1 on peut la disposer sous la tour 11, et prévoir un miroir 122 disposé sous la surface supérieure S1 du corps principal 10 de sorte à renvoyer la lumière du volume d'acquisition V vers la caméra 121.

### Moyens de mesure de position d'obstacles

L'écran 130 ne peut pas être touché (puisqu'il est sous la plaque 131 au fond de la cavité 110), ce qui est un avantage en termes d'hygiène mais empêche de l'utiliser de manière tactile.

Il serait en effet souhaitable de pouvoir utiliser l'interface utilisateur 13 non seulement comme « sortie » (output) mais également comme « entrée » (input). Par exemple, il peut être requis pour une authentification forte la saisie d'un code PIN en plus de la reconnaissance biométrique.

A ce titre, bien que cela soit surprenant il est possible de d'utiliser l'écran virtuel 130' comme entrée.

Pour cela le terminal 1 comprend avantageusement en outre des moyens de mesure de position d'obstacles 14 dans le volume V, positionnés dans la tour 11 au-dessus de la cavité 110 comme l'on voit sur la figure 1, et avantageusement plus précisément dans le plan de l'écran virtuel 130'. Par « obstacle », on entend typiquement les doigts de la main déplacée dans le volume V lorsque l'utilisateur voudra « toucher » l'écran virtuel, mais ce peut être par exemple un stylet.

De façon préférée, les moyens de mesure de position d'obstacles 14 s'étendent latéralement (selon la direction Oy), en particulier sur la largeur de la tour 11, de sorte à pouvoir détecter des mouvements des doigts de l'utilisateur dans le plan de l'écran virtuel 130'.

En termes de technologie, les moyens de mesure de position d'obstacles 14 peuvent comprendre un ensemble d'émetteurs et de récepteurs infrarouges : les obstacles tels que les doigts viennent « couper » les faisceaux infrarouges, et c'est cela qui est détecté. Pour saisir un code PIN on peut ainsi « swiper » sur un clavier affiché par l'écran 130 (et donc l'écran virtuel 130'). L'invention ne sera cependant limitée à aucune technologie en particulier de mesure de position d'obstacles.

A noter que l'utilisation des infrarouges peut poser problème en combinaison avec des moyens d'acquisition optique 12 eux-mêmes à infrarouges, c'est pourquoi on peut préférentiellement mettre en œuvre du multiplexage temporel : les moyens de mesure de position d'obstacles 14 sont synchronisés avec lesdits moyens d'acquisition optique 12 (et plus précisément les moyens d'éclairage infrarouge 120 et la caméra 121) de sorte à ne pas illuminer le volume d'acquisition V pendant l'acquisition de données par lesdits moyens d'acquisition optique 12, cela n'affecte en rien l'expérience utilisateur mais garantit les meilleurs performances à la fonction en acquisition biométrique et en contrôle de l'interface utilisateur 13.

### Autres améliorations

Les terminaux biométriques existants comprennent le plus souvent un lecteur sans-contact (de type NFC « Near Field Communication ») par exemple pour des cartes de type Prox, iClass, MIFARE et DESFire (ou même un terminal mobile), soit comme alternative aux cartes présentant un QR code évoquées avant pour gérer des utilisateur « visiteurs » dont la biométrie n'est pas présente dans la base de données de référence (on leur donne une carte sans-contact active temporairement), soit pour mettre en œuvre une authentification forte (par exemple pour du contrôle d'accès de haute sécurité comme l'accès à une salle de serveurs), dans laquelle on requiert l'authentification biométrique et la possession d'une carte sans-contact personnelle.

Par exemple, dans le terminal MorphoWave ce lecteur sans-contact est dans la casquette à présent supprimée. Le présent terminal 1 propose astucieusement de disposer le lecteur sans-contact dans la tour 11 de sorte à pouvoir communiquer avec une carte placée dans le volume d'acquisition V. Par exemple, le lecteur peut être disposé sur un flanc de la cavité 110 (notamment le flanc inférieur, ce qui permet d'avoir le lecteur « sous » l'écran virtuel 130').

Ainsi, tout se fait dans le volume V quel que soit le type d'action à mettre en œuvre (biométrie, manipulation de l'interface 13, et présentation d'une carte à code QR ou d'une carte sans-contact) de manière très intuitive : l'utilisateur même novice n'a pas à chercher les lecteurs ou à comprendre les interfaces, d'où un flux de passage encore plus élevé.

### Procédé d'utilisation du terminal

Selon un deuxième aspect, l'invention concerne le procédé d'utilisation du terminal 1 selon le premier aspect, i.e. l"acquisition une image d'une empreinte biométrique au moyen du terminal 1.

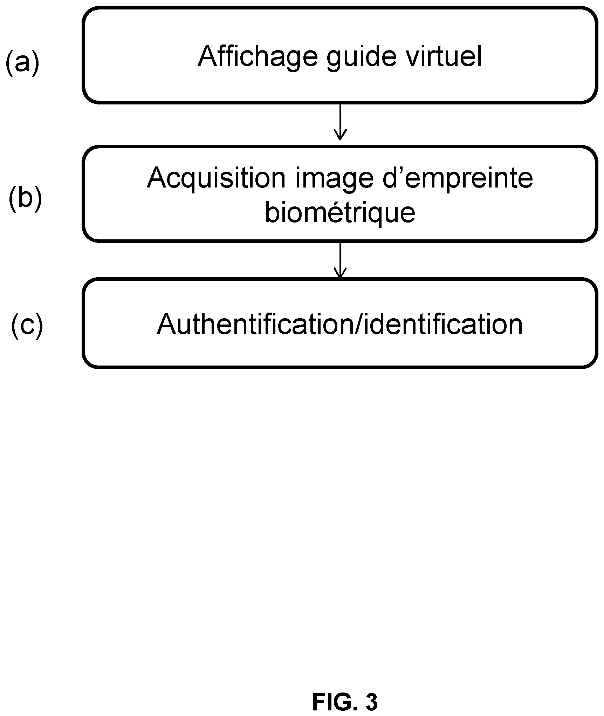

En référence à la **Figure 3****,** le procédé comprend les étapes suivantes :
(a) Affichage par l'écran 130 d'un guide virtuel (de sorte à ce que ce guide apparaisse sur l'écran virtuel 130' « flottant » dans le volume V) pour aider un utilisateur à placer son empreinte biométrique dans le volume d'acquisition V (en regard de la surface supérieure S1) ;
(b) Acquisition par les moyens d'acquisition optique 12 d'une image de l'empreinte biométrique (bien) placée dans le volume d'acquisition V ;
(c) Avantageusement, identification ou authentification de l'utilisateur sur la base de l'image de l'empreinte biométrique.

A noter que les étapes (a), (b) et/ou (c) peuvent être sensiblement simultanées : pendant que le guide est affiché les moyens d'acquisition optique 12 acquièrent des images au fur et à mesure que l'utilisateur amène sa main vers l'emplacement défini par le guide virtuel, jusqu'à ce qu'une image de suffisamment bonne qualité pour que l'authentification/identification puisse être mise en œuvre soit acquise.

## Revendications

1. Terminal (1) comprenant
- un corps principal (10) présentant une surface supérieure (S1) sensiblement horizontale ;
- une tour (11) s'étendant sensiblement verticalement depuis ledit corps principal (10), de sorte à définir un volume d'acquisition (V) délimité par ladite surface supérieure (S1) et la tour (11) ;
- des moyens d'acquisition optique (12) disposés dans le corps principal (10) de sorte à pouvoir acquérir une image d'une empreinte biométrique placée dans le volume d'acquisition (V) en regard de la surface supérieure (S1) ;
- une interface utilisateur (13) disposée dans la tour (11) ;
**caractérisé en ce que** la tour (11) présente une cavité (110), et l'interface utilisateur (13) comprend un écran (130) disposé au fond de la cavité (110) et une plaque semi-réfléchissante (131) fermant la cavité (110) de sorte à donner l'illusion optique que ledit écran (130) flotte dans le volume d'acquisition (V).

2. Terminal selon la revendication 1 dans lequel la tour (11) présente une surface frontale (S2) dans laquelle est intégrée ladite plaque semi-réfléchissante (130).

3. Terminal selon la revendication 2, dans lequel ledit volume d'acquisition (V) est uniquement fermé par lesdites surface supérieure (S1) du corps principal (10) et surface frontale (S2) de la tour (11).

4. Terminal selon l'une des revendications 1 et 3, dans lequel l'écran (130) et la plaque semi-réfléchissante (131) s'étendent selon des plans sécants, ladite cavité (110) s'étendant selon un axe sensiblement orthogonal audit plan selon lequel s'étend l'écran (130), en particulier un axe orienté en direction de la surface supérieure (S1) du corps principal (10).

5. Terminal selon l'une des revendications 1 à 4, dans lequel les moyens d'acquisition optique (12) permettent l'acquisition d'images infrarouge, le corps principal (10) comprenant en outre des moyens d'éclairage infrarouge (120) du volume d'acquisition (V).

6. Terminal selon la revendication 5, dans lequel les moyens d'acquisition optique (12) comprennent avantageusement une caméra infrarouge (121) disposé à l'intérieur du corps principal (10) sous la tour (11), et un miroir (122) disposé sous la surface supérieure (S1) du corps principal (10) de sorte à renvoyer la lumière du volume d'acquisition (V) vers la caméra (121).

7. Terminal selon l'une des revendications 1 à 6, dans lequel le terminal (1) comprend en outre des moyens de mesure de position d'obstacles (14) dans le volume (V), positionnés dans la tour (11) au-dessus de la cavité (110).

8. Terminal selon la revendication 7, dans lequel les moyens de mesure de position d'obstacles (14) comprennent des émetteurs et des récepteurs infrarouges.

9. Terminal selon les revendications 5 et 8 en combinaison, dans lequel les moyens de mesure de position d'obstacles (14) sont synchronisés avec lesdits moyens d'acquisition optique (12) de sorte à ne pas illuminer le volume d'acquisition (V) pendant l'acquisition de données par lesdits moyens d'acquisition optique (12).

10. Terminal selon l'une des revendications 1 à 9, comprenant en outre un lecteur sans-contact disposé dans la tour (11) de sorte à pouvoir communiquer avec une carte placée dans le volume d'acquisition (V).

11. Terminal selon l'une des revendications 1 à 10, dans lequel l'écran (130) est configuré pour afficher en fonctionnement un guide virtuel pour aider un utilisateur à placer son empreinte biométrique dans le volume d'acquisition (V).

12. Terminal selon l'une des revendications 1 à 11, dans lequel la plaque semi-réfléchissante (131) est une plaque d'au moins une couche de micromiroirs (132) s'étendant parallèlement entre eux selon une direction orthogonale au plan dans lequel s'étend la plaque semi-réfléchissante (131).

13. Terminal selon l'une des revendications 1 à 12, adapté pour le contrôle d'accès, comprenant en outre des moyens de traitement d'une image d'une empreinte biométrique acquise par les moyens d'acquisition optique (12), ladite empreinte biométrique étant au moins une empreinte digitale d'une main.

14. Procédé d'acquisition d'une image d'une empreinte biométrique au moyen d'un terminal (1) selon l'une des revendications 1 à 13, **caractérisé en ce qu'**il comprend la mise en œuvre d'étapes de :
(a) Affichage par l'écran (130) d'un guide virtuel pour aider un utilisateur à placer son empreinte biométrique dans le volume d'acquisition (V) ;
(b) Acquisition par les moyens d'acquisition optique (12) d'une image de l'empreinte biométrique placée dans le volume d'acquisition (V).

## Patentansprüche

1. Terminal (1), umfassend
- einen Hauptkörper (10) mit einer im Wesentlichen horizontalen Oberfläche (S1);
- einen Turm (11), der sich im Wesentlichen vertikal von dem Hauptkörper (10) erstreckt, um ein Erfassungsvolumen (V) zu definieren, das durch die Oberfläche (S1) und den Turm (11) begrenzt wird;
- optische Erfassungsmittel (12), die in dem Hauptkörper (10) angeordnet sind, um ein Bild eines biometrischen Abdrucks erfassen zu können, der in dem Erfassungsvolumen (V) gegenüber der Oberfläche (S1) platziert ist;
- eine Benutzerschnittstelle (13), die in dem Turm (11) angeordnet ist;
**dadurch gekennzeichnet, dass** der Turm (11) einen Hohlraum (110) aufweist und die Benutzerschnittstelle (13) einen Bildschirm (130), der am Boden des Hohlraums (110) angeordnet ist, sowie eine halbdurchlässige Platte (131) umfasst, die den Hohlraum (110) verschließt, um die optische Illusion zu erzeugen, dass der Bildschirm (130) in dem Erfassungsvolumen (V) schwebt.

2. Terminal nach Anspruch 1, bei dem der Turm (11) eine Vorderfläche (S2) aufweist, in die die halbdurchlässige Platte (130) integriert ist.

3. Terminal nach Anspruch 2, bei dem das Erfassungsvolumen (V) ausschließlich durch die Oberfläche (S1) des Hauptkörpers (10) und die Vorderfläche (S2) des Turms (11) geschlossen ist.

4. Terminal nach einem der Ansprüche 1 und 3, bei dem der Bildschirm (130) und die halbdurchlässige Platte (131) sich in sich schneidenden Ebenen erstrecken, wobei sich der Hohlraum (110) entlang einer Achse erstreckt, die im Wesentlichen senkrecht zur Ebene des Bildschirms (130) ist, insbesondere einer Achse, die in Richtung der Oberfläche (S1) des Hauptkörpers (10) orientiert ist.

5. Terminal nach einem der Ansprüche 1 bis 4, bei dem die optischen Erfassungsmittel (12) die Erfassung von Infrarotbildern ermöglichen, wobei der Hauptkörper (10) ferner Infrarotbeleuchtungsmittel (120) des Erfassungsvolumens (V) umfasst.

6. Terminal nach Anspruch 5, bei dem die optischen Erfassungsmittel (12) vorteilhafterweise eine Infrarotkamera (121) umfassen, die im Inneren des Hauptkörpers (10) unterhalb des Turms (11) angeordnet ist, sowie einen Spiegel (122), der unterhalb der Oberfläche (S1) des Hauptkörpers (10) angeordnet ist, um das Licht aus dem Erfassungsvolumen (V) zur Kamera (121) umzulenken.

7. Terminal nach einem der Ansprüche 1 bis 6, bei dem das Terminal (1) ferner Hindernispositionsmessmittel (14) in dem Volumen (V) umfasst, die in dem Turm (11) oberhalb des Hohlraums (110) positioniert sind.

8. Terminal nach Anspruch 7, bei dem die Hindernispositionsmessmittel (14) Infrarot-Sender und -Empfänger umfassen.

9. Terminal nach den Ansprüchen 5 und 8 in Kombination, bei dem die Hindernispositionsmessmittel (14) mit den optischen Erfassungsmitteln (12) synchronisiert sind, um das Erfassungsvolumen (V) während der Datenerfassung durch die optischen Erfassungsmittel (12) nicht zu beleuchten.

10. Terminal nach einem der Ansprüche 1 bis 9, ferner umfassend ein kontaktloses Lesegerät, das in dem Turm (11) angeordnet ist, um mit einer im Erfassungsvolumen (V) platzierten Karte kommunizieren zu können.

11. Terminal nach einem der Ansprüche 1 bis 10, bei dem der Bildschirm (130) dazu konfiguriert ist, im Betrieb eine virtuelle Anleitung anzuzeigen, um einem Benutzer zu helfen, seinen biometrischen Abdruck in das Erfassungsvolumen (V) zu platzieren.

12. Terminal nach einem der Ansprüche 1 bis 11, bei dem die halbdurchlässige Platte (131) eine Platte mit mindestens einer Schicht aus Mikrospiegeln (132) ist, die parallel zueinander in einer Richtung senkrecht zur Ebene der halbdurchlässigen Platte (131) verlaufen.

13. Terminal nach einem der Ansprüche 1 bis 12, das für die Zugangskontrolle geeignet ist und ferner Mittel zur Verarbeitung eines Bildes eines biometrischen Abdrucks umfasst, der durch die optischen Erfassungsmittel (12) erfasst wurde, wobei der biometrische Abdruck mindestens ein Fingerabdruck einer Hand ist.

14. Verfahren zur Erfassung eines Bildes eines biometrischen Abdrucks mittels eines Terminals (1) nach einem der Ansprüche 1 bis 13, **dadurch gekennzeichnet, dass** es die Durchführung der folgenden Schritte umfasst:
(a) Anzeigen eines virtuellen Leitfadens durch den Bildschirm (130), um einem Benutzer zu helfen, seinen biometrischen Abdruck in das Erfassungsvolumen (V) zu platzieren;
(b) Erfassen eines Bildes des im Erfassungsvolumen (V) platzierten biometrischen Abdrucks durch die optischen Erfassungsmittel (12).

## Claims

1. Terminal (1) comprising
- a main body (10) having a substantially horizontal upper surface (S1);
- a tower (11) extending substantially vertically from said main body (10), so as to define an acquisition volume (V) delimited by said upper surface (S1) and the tower (11);
- optical acquisition means (12) arranged in the main body (10) so as to be able to acquire an image of a biometric fingerprint placed in the acquisition volume (V) facing the upper surface (S1);
- a user interface (13) arranged in the tower (11);
**characterised in that** the tower (11) has a cavity (110), and the user interface (13) comprises a screen (130) arranged at the bottom of the cavity (110) and a semi-reflective plate (131) closing the cavity (110) so as to give the optical illusion that said screen (130) floats in the acquisition volume (V).

2. Terminal according to claim 1, wherein the tower (11) has a front surface (S2) in which said semi-reflective plate (130) is integrated.

3. Terminal according to claim 2, wherein said acquisition volume (V) is closed solely by said upper surface (S1) of the main body (10) and front surface (S2) of the tower (11).

4. Terminal according to one of claims 1 and 3, wherein the screen (130) and the semi-reflective plate (131) extend in intersecting planes, said cavity (110) extending along an axis substantially orthogonal to the plane in which the screen (130) extends, in particular an axis oriented towards the upper surface (S1) of the main body (10).

5. Terminal according to one of claims 1 to 4, wherein the optical acquisition means (12) enable the acquisition of infrared images, the main body (10) further comprising infrared illumination means (120) of the acquisition volume (V).

6. Terminal according to claim 5, wherein the optical acquisition means (12) advantageously comprise an infrared camera (121) arranged inside the main body (10) beneath the tower (11), and a mirror (122) arranged beneath the upper surface (S1) of the main body (10) so as to redirect light from the acquisition volume (V) towards the camera (121).

7. Terminal according to one of claims 1 to 6, wherein the terminal (1) further comprises obstacle position measuring means (14) in the volume (V), positioned in the tower (11) above the cavity (110).

8. Terminal according to claim 7, wherein the obstacle position measuring means (14) comprise infrared emitters and receivers.

9. Terminal according to claims 5 and 8 in combination, wherein the obstacle position measuring means (14) are synchronised with said optical acquisition means (12) so as not to illuminate the acquisition volume (V) during data acquisition by said optical acquisition means (12).

10. Terminal according to one of claims 1 to 9, further comprising a contactless reader arranged in the tower (11) so as to be able to communicate with a card placed in the acquisition volume (V).

11. Terminal according to one of claims 1 to 10, wherein the screen (130) is configured to display, in operation, a virtual guide to assist a user in placing his or her biometric fingerprint in the acquisition volume (V).

12. Terminal according to one of claims 1 to 11, wherein the semi-reflective plate (131) is a plate comprising at least one layer of micromirrors (132) extending parallel to one another in a direction orthogonal to the plane in which the semi-reflective plate (131) extends.

13. Terminal according to one of claims 1 to 12, adapted for access control, further comprising means for processing an image of a biometric fingerprint acquired by the optical acquisition means (12), said biometric fingerprint being at least one fingerprint of a hand.

14. Method for acquiring an image of a biometric fingerprint by means of a terminal (1) according to one of claims 1 to 13, **characterised in that** it comprises the implementation of the following steps:
(a) Displaying, by the screen (130), a virtual guide to assist a user in placing his or her biometric fingerprint in the acquisition volume (V);
(b) Acquiring, by the optical acquisition means (12), an image of the biometric fingerprint placed in the acquisition volume (V).
